# EUROPÄISCHE PATENTSCHRIFT

(11) **EP 2 947 343 B1**
(45) Veröffentlichungstag und Bekanntmachung des Hinweises auf die Patenterteilung: **01.08.2018**
(21) Anmeldenummer: 15165629.5
(22) Anmeldetag: 29.04.2015
(51) Int. Cl.: F16D 23/06, F16D 23/04

(54) **SYNCHRONISATIONSVORRICHTUNG**
SYNCHRONIZATION DEVICE
DISPOSITIF DE SYNCHRONISATION

(30) Priorität: 19.05.2014 DE 102014209441
(43) Veröffentlichungstag der Anmeldung: 25.11.2015
(73) Patentinhaber: Ford Global Technologies, LLC, Dearborn, MI 48126 (US)
(72) Erfinder: Kirchhoffer, Johann, 50737 Köln (DE); Robarge, John Edsel, Washtenaw, MI 48176 (US); Wroblewski, Ted, Royal Oak, MI 48067 (US); Hamm, Tom, Wixom, MI 48393 (US)
(74) Vertreter: Dörfler, Thomas

(56) Entgegenhaltungen:
- WO-A1-2004/005738
- WO-A1-2007/025845
- DE-B3-102007 010 307
- US-A- 4 869 353
- US-A- 5 113 985

## Beschreibung

Die Erfindung betrifft eine Synchronisationsvorrichtung mit einem Synchronkörper, einer Schiebemuffe, einem Gangrad mit Kupplungsverzahnung und einem zwischen Synchronkörper und Kupplungsverzahnung axial in und gegen Synchronisationsrichtung verschiebbaren Synchronring, wobei der Synchronring mittels einer Federvorrichtung in einer Neutralstellung am Synchronkörper festgelegt ist, und in der Neutralstellung unter Federvorspannung an dem Synchronkörper anliegt.

Ein Problem bei einer derartigen Synchronisationsvorrichtung ist, dass sich der Synchronring mit Zurückführung der Schiebemuffe aus einer Schaltposition, in der das Gangrad über die Kupplungsverzahnung mit dem Synchronkörper übertragungswirksam verbunden ist, in eine Neutralstellung, in der das Gangrad von dem Synchronkörper gelöst ist, häufig nicht exakt in diese Neutralstellung zurückgeführt ist, sondern noch im Reibkontakt mit dem Gangrad steht. Dies kann, verbunden mit einer den Benutzer irritierenden entsprechenden Geräuschentwicklung, zu einem Stoßen oder Taumeln des Synchronkörpers und/oder eines Konussystems zwischen Synchronring und Gangrad verursachen. Ebenfalls unter Geräuschentwicklung, kann dies mit einer häufig asymmetrischen Belastung einer in der Regel als Nadellager ausgeführte Lagerung einhergehen und ein Nadellagerkreischen verursachen.

Beispielsweise ist in einer gattungsgemäßen Synchronisationsvorrichtung gemäß der DE 35 36 361 A1 bzw. in der DE 94 08 943 U ein am Synchronkörper geführtes radial federgelagertes Rastelement in Form einer zylindrischen Rolle bzw. einer Kugel vorgesehen. Das Rastelement soll in der Neutralstellung in eine mittig an der Schiebemuffe vorgesehene Aufnahme mit radialen Schrägen eingreifen, wodurch es in der Neutralstellung mittig und radial innen an der Schiebmuffe lagefixiert ist, sich aber eine exakte radiale Ausrichtung der Federkraft nicht einstellen muss und somit ein Kippmoment auf den Synchronring mit Verkanten desselben einstellen kann.

Damit kann sich kein vollständiges Lösen des Synchronringes von dem Schaltrad an deren Konen erfolgen, sich also kein vollständiger Luftspalt zwischen den Konen ausbilden, wodurch weiterhin eine unerwünschte Kraftübertragung zwischen den Konen erfolgt. Der Synchronring kann somit nicht verlässlich in die vorschriftsgemäße Neutralstellung gebracht werden.

In DE 10 2007 010 307 B3 wird eine gattungsgemäße Synchronisationseinrichtung beschrieben, bei der die axiale Verschiebung des Synchronringes mittelbar über ein zwischen Synchronring und Synchronkörper angeordnetes Synchronglied erfolgt. Das Synchronglied greift über eine in Synchronisationsrichtung weisende Andruckfläche nur in Synchronisationsrichtung kraftwirksam an dem Synchronring an. Der Synchronring ist hingegen gegen Synchronisationsring freigelassen. Es kann kein dauerhaftes vollständiges Lösen des Synchronringes von dem Losrad erfolgen.

Aus WO 2004/005738 A1 ist eine Synchronisationsvorrichtung mit einer hydraulisch betätigbaren Schiebemuffe bekannt, wobei die Schiebemuffe über eine Rückholfeder in Neutralposition bringbar ist. In der Neutralposition ist der Synchronring über ein Spalt beabstandet zu dem Synchronkörper angeordnet,

In der EP 1 624 212 A1 wird ein Ausgleichshebel, schwenkbar um eine Zentralachse eines zum Verschieben des Synchronringes gegen die Sperrverzahnung, vorgeschlagen, wobei der Ausgleichshebel, zwischen zwei spiegelsymmetrisch zueinander angeordneten Synchronisationsvorrichtungen angeordnet, auf die beiden Synchronringe der Synchronisationsvorrichtungen einwirkt.

Gemäß der DE 195 80 558 C1 erfolgt die Federlagerung des Rastelementes in einer Aufnahme, die sich beweglich auf beiden Synchronringe der spiegelsymmetrisch zueinander angeordneten Synchronisationsvorrichtungen abstützt, um einer Verkippen der Synchronringe entgegenzuwirken.

In der DE 10 2009 039 934 A1 wird das federgelagerte Rastelement auf dem Weg in die Neutralstellung hinein zur seiner Ausrichtung an sich radial konischen annähernden Führungsflächen in die mittig an der Schiebemuffe vorgesehene Aufnahme hinein geführt.

Ferner ist aus der US 4,869,353 A eine Synchronisationsvorrichtung der eingangs genannten Art bekannt, bei der bereits der Synchronring mittels einer Federvorrichtung in einer Neutralstellung an dem Synchronkörper festgelegt ist, wobei der Synchronring in der Neutralstellung unter Federvorspannung an dem Synchronkörper anliegt. Bei dieser Konstruktion ist jedoch der Federmechanismus sehr ungünstig gestaltet. Der Federmechanismus gibt zwar die Neutralstellung mit seiner axialen Kraft vor und definiert somit die gewünschte Neutralstellung. Zwischen dem Synchronkörper und dem jeweiligen Synchronring ist jedoch eine Kugellagerung mit gegenläufigen schrägen Auflaufflächen vorgesehen, bei der für die Rückführung des Synchronrings in die Neutralstellung eine sehr hohe Federkraft benötigt wird. Auch ist bei dieser Konstruktion zusätzlich eine sehr hohe Federkraft erforderlich, um die Neutralstellung zu halten.

Ausgehend von diesem Stand der Technik soll der Erfindung die Aufgabe zu Grunde liegen, die Konstruktion einfacher zu gestalten, so dass die Federkraft, die zur Rückführung des Synchronrings in die Neutralstellung sowie zum Halten des Synchronrings in dieser Position benötigt wird, gering gehalten werden kann.

Gemäß der Erfindung wird diese Aufgabe mit den Merkmalen des Anspruchs 1 gelöst, nämlich dadurch, dass die Federvorrichtung eine Federanordnung aufweist, die sich mit einer ersten Seite federkraftwirksam an einem an dem Synchronring vorgesehenen ersten Anschlagselement in Richtung auf den Synchronkörper abstützt, und dass das erste Anschlagselement an dem Synchronkörper axial geführt angeordnet ist, wobei das erste Anschlagselement eine radial nach außen gerichtete erste Gleitfläche mit radialer Flächennormalen und der Synchronkörper eine zweite Gleitfläche aufweist, an der die erste Gleitfläche des ersten Anschlagselements über einen axialen Führungswegs gleitend anliegt.

Durch die erfindungsgemäße Konstruktion wird die Positionierung des Synchronrings erheblich verbessert und insbesondere vereinfacht, da der Synchronring mithilfe des ersten Anschlagselements gezielt mittelbar oder unmittelbar an dem Synchronkörper geführt ist. Die vorgesehene Federkraft, mit der der Synchronring nach der Synchronisierung in die Neutralstellung zurückgeführt und anschließend in dieser zurückgeführten Position gehalten wird, kann somit relativ gering sein, denn die Federkraft braucht nur die Axialverschiebung zu bewirken, um den Synchronring in der Neutralstellung zu halten, wobei keine Quer- oder Rotationskräfte aufzufangen sind.

Mit dem Festlegen des Synchronringes mittels der Federvorrichtung wird eine verlässliche Positionierung des Synchronringes in der Neutralstellung erzielt. Der Synchronring ist mittels der Federvorrichtung in die Neutralstellung hinein bewegbar angeordnet. Der Synchronring kann mittels der Federvorrichtung in eine definierte Neutralstellung hinein gegen den Synchronkörper gebracht werden. Die Neutralstellung wird durch die Festlegung des Synchronringes an dem Synchronkörper definiert. Mittels der Federvorrichtung kann der Synchronring in eine definierte relative Anlageposition zu dem Synchronkörper gebracht werden. Diese ist unter normalen Betriebsbedingungen stets gleich. Der Synchronring ist in der Neutralstellung an dem Synchronkörper ausgerichtet. Da die Position des Synchronkörpers bei dem Schaltvorgang relativ zum Gehäuse bzw. zu einer den Synchronkörper antreibenden Antriebswelle der Synchronisationsvorrichtung während des Schaltvorgangs unverändert bleibt, wird der Synchronring mit seiner Festlegung an den Synchronkörper mittels der Federvorrichtung in eine stets gleiche Neutralstellung gebracht. Es wird eine optimale radiale und axiale Ausrichtung des Synchronringes in der Neutralstellung ermöglicht. Somit können beispielsweise auf Synchronring und Gangrad wirkende Schleppmomente infolge beispielsweise eine Schiefstellung und/oder einer unvollständiger Rückstellung des Synchronrings sowie einen Nutzer irritierende Geräusche des Synchronrings vermieden werden. Der Synchronring liegt in der Neutralstellung unter Federvorspannung an dem Synchronkörper an.

Der Synchronring wird zur Einleitung des Synchronisierungsvorgangs in eine Synchronisationsrichtung vom Synchronkörper weg zum Gangrad axial zu der Kupplungsverzahnung hin auf der Antriebswelle verschoben. Kraftmechanisch vorteilhaft kann vorgesehen sein, dass zur Rückholung des Synchronringes in seine definierte Neutralstellung hinein mittels der Federvorrichtung eine Federkraft gegen Synchronisationsrichtung axial in den Synchronring einkoppelbar ist. Damit kann ein entsprechend reibungsarmes Verschieben des Synchronringes ohne Kippmomente gegen die Synchronisationsrichtung zu dem Synchronkörper in die Neutralstellung hinein erzielt werden. Die Definition des Raumes und dessen Richtungen, wie axial, umfänglich und radial, beziehen sich, wenn nicht ausdrücklich anders erwähnt, auf die Antriebswelle.

In einer Weiterbildung der Synchronisationsvorrichtung kann die Federvorrichtung eine Federanordnung aufweisen, die sich mit einer ersten Seite federkraftwirksam an einem an dem Synchronring vorgesehenen ersten Anschlagselement abstützt. Dieses Abstützen kann unmittelbar oder auch mittelbar erfolgen. Kraftmechanisch günstig stützt sich die Federanordnung mit ihrer ersten Seite in axialer Richtung an dem ersten Anschlagselement ab.

Konstruktiv einfach kann das erste Anschlagselement als Ringelement ausgebildet sein. Das Ringelement kann koaxial zum Synchronring angeordnet sein Es kann an dem Synchronring fixiert angeordnet sein. Das Ringelement kann in einem Preßsitz an dem Synchronring festgelegt sein. Der Synchronring kann eine erste Aufnahme für das Ringelement aufweisen. Diese kann als Steckaufnahme ausgebildet sein. Die erste Aufnahme kann maulartig mit einer vorzugsweise radial nach außen weisenden Maulöffnung ausgebildet sein. Die erste Aufnahme kann alternativ eine radial nach außen weisende Fläche mit einer rein radialen Flächennormalen oder mit einer gering in Synchronisationsrichtung geneigten, jedoch im Wesentlichen radialen Flächennormalen aufweisen. Die Abweichung der geneigten Flächennormale von der rein axialen Flächennormale kann lediglich wenige Grade, vorzugsweise bis 5° betragen.

Das erste Anschlagselement kann an dem Synchronkörper vorzugsweise linear axial geführt angeordnet sein. Damit kann das erste Anschlagelement, über einen axialen Führungsweg exakt zum Synchronköper ausgerichtet und an demselben geführt werden. Die Führungsfunktion kann unter unmittelbarer oder mittelbarer Anlage des ersten Anschlagselementes am Synchronkörper erfolgen. Der axiale Führungsweg kann sich zumindest von der Neutralstellung des Synchronringes bis zu dessen kraftübertragungswirksamen Anlage an das Gangrad erstrecken. Vorteilhaft kann somit die axiale Führung des Synchronringes an dem Synchronkörper während der gesamten Synchronisation erfolgen. Damit kann gewährleistet werden, dass während des Synchronvorganges bis hin zur Rückführung des Synchronringes in die Neutralstellung kein Verkippen des Synchronringes auftritt.

Diese Führung kann mittels vorzugsweise gleitverschieblicher Anlage des ersten Anschlagelementes an dem Synchronkörper erfolgen. Das erste Anschlagselement kann eine radial nach außen weisende erste Gleitfläche mit radialer Flächennormale aufweisen, in der das erste Anschlagselement über den Führungsweg gleitverschieblich an dem Synchronkörper anliegt. Der Synchronkörper kann eine zur ersten Gleitfläche des ersten Anschlagselementes kongruente bzw. passende radial nach Innen weisende zweite Gleitfläche zur unmittelbaren Anlage und Führung des ersten Anschlagelementes aufweisen. Die beiden Gleitflächen können jeweils radial außen angeordnet sein. In Ausbildung der seiner zweiten Gleitfläche kann der Synchronkörper beispielsweise eine sich in Synchronisationsrichtung erstreckende Schulter aufweisen, an der das erste Anschlagselement radial außen axial geführt angeordnet ist. Übliche Synchronkörper können eine derartige Schulter aufweisen, die eventuell konstruktiv angepasst werden müsste.

Das erste Anschlagelement kann eine zu seiner ersten Gleitfläche parallele nach innen weisende Anlagefläche aufweisen, in der das erste Anschlagelement an dem Synchronring festgelegt ist. Damit kann das Anschlagelement zu der ersten Gleitfläche ausgerichtet leicht an dem Synchronring montiert werden.

In einer Weiterbildung der Synchronisationsvorrichtung kann die Schiebemuffe in der Neutralstellung an dem Synchronkörper gegen eine axiale Verschiebung lagestabilisiert angeordnet sein. Die Schiebemuffe kann somit erst unter Einleitung einer bestimmten axialen Kraft aus der Neutralstellung heraus bewegt werden. Hierbei kann die Schiebemuffe in der Neutralstellung über eine Schnappverbindung oder Rastverbindung an dem Synchronkörper gehalten angeordnet sein.

In einer bevorzugten Ausführungsform der Synchronisationsvorrichtung kann die Federvorrichtung zwischen Synchronring und Synchronkörper federkraftwirksam angeordnet sein. Die Federanordnung kann sich federkraftwirksam mit ihrer ersten Seite an dem Synchronring und mit einer zweiten Seite an dem Synchronkörper abstützen.

Hierbei kann die Federvorrichtung ein zweites Anschlagselement aufweisen, das fest mit dem Synchronkörper verbunden ist. An dem zweiten Anschlagselement kann sich die Federanordnung mit einer zweiten Seite axial abstützen.

Anstatt an unmittelbar am Synchronkörper, insbesondere an dessen Schulter angeordnet, kann die zweiten Gleitfläche zur gleitverschieblichen Anlage und Führung des ersten Anschlagselementes an dem zweiten Anschlagselement angeordnet sein, an der das erste Anschlagselement über den Führungsweg gleitverschieblich anliegt. Die zweite Gleitfläche kann radial nach Innen weisen. Damit liegt das erste Anschlagselement mittelbar an Synchronkörper an, wobei jedoch auch mit dem mittelbaren Anliegen des ersten Anschlagselementes eine exakte axiale Führung desselben erzielbar ist.

Vorteilhaft übergreift das zweite Anschlagelement unter Begrenzung einer zweiten Aufnahme die Federanordnung radial außen in Synchronisationsrichtung, wobei sich die Federanordnung mit ihrer zweiten Seite in Synchronisationsrichtung an dem zweiten Anschlagselement abstützen kann. Hierbei kann das zweite Anschlagelement eine zweite Aufnahme für die Federanordnung und das erste Anschlagselement radial nach außen begrenzen.

Die Federanordnung und/oder das erste Anschlagselement können in der zweiten Aufnahme linear geführt angeordnet sein. In Begrenzung der zweiten Aufnahme in Synchronisationsrichtung kann das zweite Anschlagelement einen U-förmigen Querschnitt mit einem in Synchronrichtung vorderen, einen in Synchronrichtung hinteren Schenkel und einen die beiden Schenkel verbindenden Quersteg ausgebildet sein. Die Federanordnung kann sich in Synchronisationsrichtung vorn an dem hinteren Schenkel abstützen, während der vordere Schenkel an dem Synchronkörper festgelegt sein kann. Bei einer baulichen Variante kann das zweite Anschlagelement ein L-Profil mit nur dem hinteren Schenkel und dem Quersteg aufweisen, wobei der Quersteg gegen Synchronisationsrichtung an dem Synchronkörper festgelegt ist.

Eine zur oben beschriebenen Lösung mit der Federkraftwirksamkeit der Federvorrichtung zwischen Synchronring und Synchronkörper alternative Lösung der gestellten Aufgabe kann vorsehen, dass die Federvorrichtung zwischen Synchronring und Gangrad federkraftwirksam ist.

In einer Weiterbildung der Synchronisationsvorrichtung kann vorgesehen sein, dass sich die Federanordnung mit der zweiten Seite axial an dem Gangrad abstützt. Da sich die Federanordnung mit ihrer ersten Seite mittelbar über das erste Anschlagselement an dem Synchronring abstützen kann, erfolgt somit die axiale Federkraftwirkung im Wesentlichen auf das Gangrad und den Synchronring.

Dies bringt den Vorteil mit sich, dass, bei einer üblichen Anordnung zweier spiegelsymmetrisch zueinander angeordneter Synchronisationsvorrichtungen mit gemeinsamem mittigem Synchronkörper, die Federanordnungen der erfindungsgemäßen Synchronisationsvorrichtung in ihrer Wirkung einander entgegengesetzt sind. Damit kann in einem Kräftegleichgewicht zum einem die Neutralstellung des Synchronrades und/oder der an demselben geführten Synchronringe von beiden Seiten eingestellt werden. Ferner kann hierüber ein sogenanntes Lüftungsspiel, d.h. ein Luftspalt zwischen den Konen von Synchronring und Gangrad eingestellt werden.

In einer Weiterbildung der Synchronisationsvorrichtung kann das Gangrad eine radial nach innen zum Synchronring beabstandete dritte Aufnahme zur axialen Führung und Abstützung der Federanordnung in Synchronisationsrichtung aufweisen. Diese radiale Beabstandung wird aus baulichen Gründen notwendig, einen kraftübertragungswirksamen Angriff des ersten Anschlagselementes an die Federanordnung und damit an das Gangrad zu ermöglichen.

Die Federvorrichtung kann zur Abstützung der ersten Seite der Federanordnung ein drittes Anschlagselement aufweisen, das an dem Gangrad geführt und Federkraft übertragungswirksam nicht drehbeweglich, aber axial verschiebbar gegen das erste Anschlagselement gelagert, angeordnet ist.

Das dritte Anschlagselement kann als Kragenscheibe mit einem Scheibenteil und einem radial äußeren sich in Synchronisationsrichtung erstreckenden Kragenstück ausgebildet sein. Hierbei kann sich die Federanordnung mit ihrer zweiten Seite an dem Scheibenteil abstützen und das Scheibenteil radial innen an dem Gangrad axial geführt angeordnet sein. Wegen der Relativbewegung zwischen Synchronring und Gangrad außerhalb der Synchronisation kann das dritte Anschlagselement gegen Synchronisationsrichtung axial gegen das erste Anschlagselement drehbeweglich gelagert angeordnet sein. Die Lagerung kann über ein Nadellager erfolgen.

Das Kragenstück kann sich vorzugsweise axial in Synchronisationsrichtung von dem Scheibenteil erstrecken. Das Kragenstück kann sich teilumfänglich am Schieberteil erstrecken. Zur verdrehfesten Anlagerung und axialen Führung des dritten Anschlagelementes an dem Gangrad kann das dritte Anschlagelement in eine an dem Gangrad vorgesehene und ihm angepasste axiale Öffnung eingreifen. Alternativ kann die dritte Aufnahme auch ein U-Profil mit zum Synchronkörper geöffneter Öffnung aufweisen. Damit kann die Federanordnung und das dritte Anschlagelement in der dritten Aufnahme radial geblockt und axial geführt angeordnet sein.

Zur Überwindung des radialen Abstandes von der ersten Aufnahme an dem Synchronring und der dritten Aufnahme an dem Gangrad kann das erste Anschlagelement als axial beweglich gelagerte Drehscheibe mit einem sich in Synchronisationsrichtung erstreckenden umlaufenden Vorsprung ausgebildet sein. Der Vorsprung kann radial außen an der Drehscheibe angeordnet sein. Er kann sich in Synchronisationsrichtung zu dem Synchronring hin erstrecken und in die erste Aufnahme hineinragen, wobei er in Richtung radial nach innen vorzugsweise in einem Presssitz auf dem Synchronring festgelegt ist. Das dritte Anschlagelement kann ferner radial nach innen beabstandet zur dem Vorsprung der Drehscheibe vorzugsweise über ein Nadellager drehbeweglich axial an derselben angelagert sein.

Hinsichtlich einer Geräuschdämpfung günstig, kann zumindest eines der Anschlagselemente aus einem dämpfungswirksamen Werkstoff, wie Kunststoff, gefertigt sein. Vorzugsweise ist zumindest eines der Anschlagselemente einstückig ausgebildet.

Die Federanordnung kann zumindest ein Federelement zur Erzeugung der Federkraft aufweisen. Hierbei kann das Federelement beliebiger Bauart unter der Voraussetzung sein, dass durch diese die erforderliche Federkraft zur Rückholung des Synchronkörpers in die Neutralstellung hinein erzeugbar ist. So kann das Federelement als Druckfeder ausgebildet sein. Sie kann beispielweise als Schraubenfeder, Tellerfeder, Elastomerfeder aus insbesondere Polyurethan oder Gummifeder ausgebildet sein. Die Elastomerfeder kann blockartig und/oder einstückig sein. Zum leichteren Einbau in die zweite oder dritte Aufnahme kann die Elastomerfeder radial nach innen mit einer in radialer Richtung verlaufenden schiefen Ebene ausgebildet sein.

Zur über den Umfang symmetrischen Krafteinleitung einer Federkraft in den Synchronring kann vorgesehen sein, dass mindestens zwei Federvorrichtungen, vorzugsweise drei Federvorrichtungen, vorgesehen sind, die umfänglich gleich beabstandet zueinander angeordnet sind.

Es kann alternativ eine Synchronisationsanordnung mit zwei Synchronisationsvorrichtungen gemäß einer der zuvor und/oder nachfolgend beschriebenen Ausführungsformen vorgesehen sein, bei denen jeweils der Synchronring mittels einer Federvorrichtung in einer Neutralstellung am Synchronkörper festgelegt ist und die, jeweils spiegelsymmetrisch zueinander angeordnet, einen gemeinsamen mittig angeordneten Synchronkörper aufweisen. wobei die Federvorrichtungen der beiden Synchronisationsvorrichtungen in ihrer Federkraftwirkung einander entgegengesetzt sind.

Die vorliegende Erfindung wird im Folgenden anhand zweier in einer Zeichnung dargestellten Ausführungsformen der Synchronisationsvorrichtung näher erläutert. In der Zeichnung zeigen:
- Fig. 1: eine bezüglich einer Synchronisationsrichtung Längsschnittansicht einer ersten Ausführungsform einer Synchronisationsvorrichtung mit Synchronkörper und Schiebemuffe in einer Neutralstellung,
- Fig. 2: eine Längsschnittansicht der ersten Ausführungsform der Synchronisationsvorrichtung gemäß Figur 1, jedoch in einer Synchronisationsstellung,
- Fig. 3: eine axiale Seitenansicht des Synchronkörper und der Schiebemuffe der Synchronisationsvorrichtung gemäß Figur 1,
- Fig. 4: eine bezüglich einer Synchronisationsrichtung Längsschnittansicht einer zweiten Ausführungsform der Synchronisationsvorrichtung in Neutralstellung und
- Fig. 5: eine Ausschnittsvergrößerung V gemäß Figur 4.

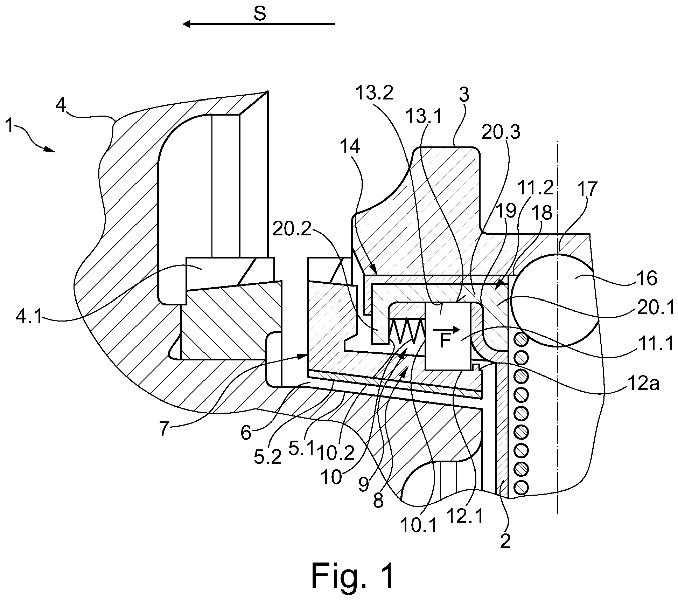

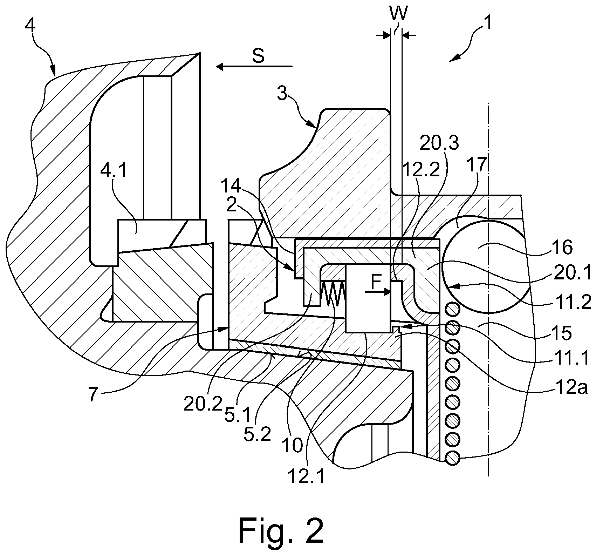

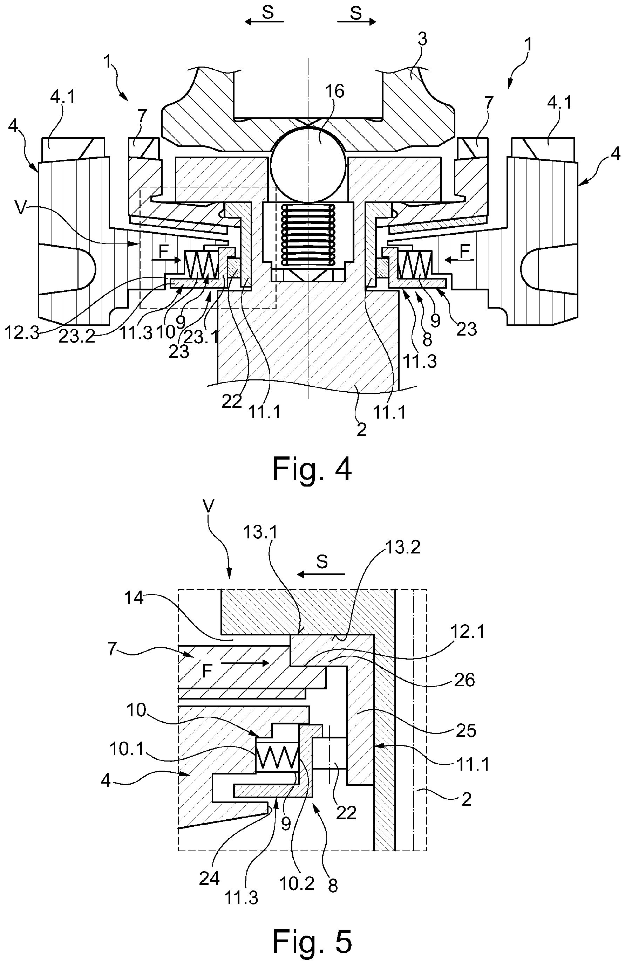

In den Figuren 1 und 2 wird bezüglich einer Synchronisationsrichtung s eine Längsschnittansicht eine erste Ausführungsform einer Synchronisations-vorrichtung 1 mit Synchronkörper 2, Schiebemuffe 3, Gangrad 4 mit erstem Konus 5.1 und Kupplungsverzahnung 4.1 sowie zwischen Synchronkörper 2 und Kupplungsverzahnung 4.1 axial in und gegen Synchronisationsrichtung s verschiebbaren Synchronring 7 mit zweitem Konus 5.2 in einer Neutralstellung, in der die Konen 5.1, 5.2 über einen Luftspalt 6 vollständig voneinander bestandet sind, bzw. in einer Synchronisationsstellung gezeigt, in der die Konen 5.1, 5.2 Drehmoment übertragungswirksam aneinander anliegen. Die Synchronisationsrichtung s erfolgt von dem Synchronkörper 2 zu dem Gangrad 4 hin. Figur 4 gibt eine Längsschnittansicht einer zweiten Ausführungsform der Synchronisationsvorrichtung 1 in der Neutralstellung wieder.

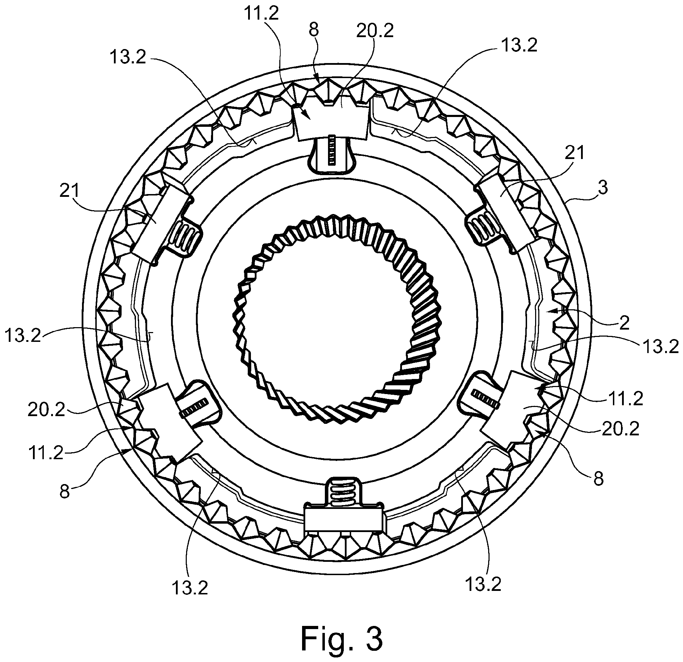

Der Synchronring 7 ist erfindungsgemäß mittels einer Federvorrichtung 8 in der Neutralstellung gemäß den Figuren 1 und 3 am Synchronkörper 2 festgelegt angeordnet. Mittels der Federvorrichtung 8 ist eine Federkraft F gegen Synchronisationsrichtung s axial in den Synchronring 7 einkoppelbar. Die Federvorrichtung 8 weist eine Federanordnung 9 mit hier jeweils einem Federelement 10 auf, das sich mit einer ersten Seite 10.1 federkraftwirksam an einem an dem Synchronring 7 vorgesehenen ersten Anschlagselement 11.1 abstützt. Das Federelement 10 ist hier beispielgebend als Schraubendruckfeder ausgebildet. Es ist somit eine bestimmte, über die Auslegung der Federvorrichtung 8 einstellbare Federkraft F gegen Synchronisationsrichtung s axial in den Synchronring 7 einleitbar.

Wie in den Figuren 1 bzw. 4 ersichtlich, liegt der Synchronring 7 in der Neutralstellung mittelbar (Figur 1) bzw. unmittelbar (Figur 4) an dem Synchronkörper 2 an. Infolge dieser gleitverschieblichen in und gegen Synchronisationsrichtung geführten Anlage des Synchronringes 7 ist in beiden oben genannten Fällen die relative Lage des Synchronringes 7 zu dem Synchronkörper 2 über einen Führungsweg w exakt vorgegeben. Damit ist auch die Neutralstellung des Synchronringes 7 exakt definiert.

Das erste Anschlagselement 11.1 ist, bezüglich einer hier nicht dargestellten Antriebswelle für den Synchronkörper 2, als ein koaxial zum Synchronring 7 angeordnetes in einer ersten Aufnahme 12.1 an dem Synchronring 7 im Presssitz festgelegtes Ringelement ausgebildet. Das erste Anschlagselement 11.1 liegt, über einen Führungsweg w zwischen Neutralstellung und Synchronisationsposition axial geführt, gleitverschieblich an dem Synchronkörper 2 an. Das erste Anschlagselement 11.1 weist eine radial nach außen weisende erste Gleitfläche 13.1 mit radialer Flächennormale auf. Das erste Anschlagselement 11.1 liegt mit seiner ersten Gleitfläche 13.1 gleitverschieblich an einer zweiten Gleitfläche 13.2 an, die radial nach innen weist. Diese zweite Gleitfläche 13.2 ist in der Ausführungsform der Synchronisationsvorrichtung 1 gemäß Figuren 1 und 2 an einem zweiten Anschlagselement 11.2 angeordnet, das fest an dem Synchronkörper 2 festgelegt ist oder direkt über die Schulter 14 im Synchronkörper 2 angebracht sein kann. Damit liegt das erste Anschlagselement 11.1 über das zweite Anschlagselement 11.2 mittelbar oder unmittelbar an dem Synchronkörper an. Die zweite Gleitfläche 13.2 in der Ausführungsform der Synchronisationsvorrichtung 1 gemäß Figur 4 ist unmittelbar an einer radial außen liegenden sich in Synchronisationsrichtung s erstreckende Schulter 14 mit der ebenfalls radial nach innen weisender zweiter Gleitfläche 13.2 am Synchronkörper 2 angeordnet, so dass das erste Anschlagselement 11.1 unmittelbar an dem Synchronkörper 2 axial in und gegen Synchronisationsrichtung s geführt angeordnet ist.

Die Schiebemuffe 3 ist in der Neutralstellung an dem Synchronkörper 2 gegen eine axiale Verschiebung lagestabilisiert angeordnet, um sie ebenfalls in einer definierten Neutralstellung zu halten, wobei sie unter Einleitung einer bestimmten axialen Kraft aus der Neutralstellung heraus bewegt werden kann. Die Schiebemuffe 3 ist in der Neutralstellung hier über eine Schnappverbindung oder Rastverbindung an dem Synchronkörper 2 gehalten angeordnet. Hierzu weist der Synchronkörper 2 axial mittig eine radial nach außen geöffnete Kugelaufnahme 15 mit einer federbelasteten Kugel 16 auf, die in der Neutralstellung radial gegen die Schiebemuffe 3 geführt in eine radial innen und axial mittig an der Schiebemuffe 3 vorgesehene kugelkalottenartige Ausnehmung 17 einrastet, wobei die Kugel 16 gegen eine die Kugelaufnahme 15 überdeckende Lochblende 18 geführt ist und in der Neutralstellung radial über der Lochblende 18 vorsteht.

Die beiden Ausführungsformen unterscheiden sich insbesondere dadurch, dass die Federvorrichtung 8 in der ersten Ausführungsform der Synchronisationsvorrichtung 1 gemäß den Figuren 1 und 2 zwischen Synchronring 7 und Synchronkörper 2 und in der zweiten Ausführungsform der Synchronisationsvorrichtung 1 gemäß Figur 4 zwischen Synchronring 7 und Gangrad 4 federkraftwirksam ist.

Im Weiteren zur ersten Ausführungsform gemäß Figuren 1 und 2 gewandt, so weist die Federvorrichtung 8 ein zweites Anschlagselement 11.2 auf, das fest mit dem Synchronkörper 2 verbunden ist und an dem sich die Federanordnung 9 mit einer zweiten Seite 10.2 axial abstützt. Das zweite Anschlagselement 11.2 übergreift unter Begrenzung einer zweiten Aufnahme 12.2 die Federanordnung 9 radial außen in Synchronisationsrichtung s, wobei sich die Federanordnung 9 mit ihrer zweiten Seite10.2 in Synchronisationsrichtung s axial hinten an dem zweiten Anschlagselement 11.2 abstützt (Figuren 1 und 2). Die ersten Aufnahme 12.1 weist ein U-förmiges Profil mit einem in Synchronisationsrichtung s vorderen Vorsprung 12a auf, wodurch das ringförmige erste Anschlagselement 11.1 axial verschiebungssicher gehalten ist

Hier anhand des Beispiels der ersten Ausführungsform der Synchronisationsvorrichtung 1, verdeutlicht Figur 3 die Positionierung der Federvorrichtung an dem Synchronkörper 2 und zu der Schiebemuffe 3, wobei diese in einer axialen Seitenansicht und zwar gegen Synchronisationsrichtung s gezeigt sind. Es sind hier drei Federvorrichtungen 8 vorgesehen sind, die wegen einer Kräftesymmetrie bezüglich einer hier nicht dargestellten Antriebsachse für den Synchronkörper 2 umfänglich gleich beabstandet, d.h. in einem Drehwinkel von 120° zueinander angeordnet sind.

Das zweite Anschlagelement 11.2 einer jeden Federvorrichtungen 8 ist teilringartig ausgebildet und unter seitlicher Druckspannung in einer in dem Synchronkörper 2 eingelassenen taschenartigen Steckaufnahme 19 festgelegt. Wie in Figuren 1 und 2 ersichtlich, weist das zweite Anschlagelement 11.2 einen U-förmigen Querschnitt mit einem in Synchronrichtung s vorderen Schenkel 20.1, einen in Synchronrichtung s hinteren Schenkel 20.2 und einen die beiden Schenkel 20.1, 20.2 verbindenden Quersteg 20.3 auf. Das Federelement 10 der Federanordnung 9 stützt sich in Synchronisationsrichtung s hinten an dem hinteren Schenkel 20.2 ab, während der vordere Schenkel 20.1 in der Steckaufnahme 19 an dem Synchronkörper 2 festgelegt ist. Wie den Figuren 1 und 2 entnehmbar, erstreckt sich der hintere Schenkel 20.2 radial nach innen über die Schulter 14 des Synchronköpers 2 hinaus.

Der Quersteg 20.3 verläuft in Synchronisationsrichtung s und weist radial innen die zweite Gleitfläche 13.2, an der das erste Anschlagselement 11.1 mit seiner ersten Gleitfläche 13.1 axial gleitverschieblich anliegt. Die zweite Gleitfläche 13.2 mit der Schulter 14 kann auch unmittelbar am Synchronkörper 2 angebracht sein. Damit wird der Synchronring 7 unter gleitverschieblichen Anlage des ersten Anschlagselements 11.1 an seiner ersten Gleitfläche 13.1 des zweiten Anschlagselements 11.2 exakt in und gegen Synchronisationsrichtung s, wobei das erste Anschlagselement 11.1 in der Neutralstellung gegen Synchronisationsrichtung s definiert an dem Synchronkörper 2 anschlägt.

In Figur 3 sind ferner übliche federbelastete Gleitsteine 21 zur axialen Verschiebung des Synchronringes 7 in Synchronisationsrichtung s gezeigt, wobei die Gleitsteine 21 ebenfalls in einem Drehwinkel von 120° voneinander beabstandet und um einen Drehwinkel 60° zu den jeweils benachbarten Federvorrichtungen 8 beabstandet angeordnet sind.

Figur 4 zeigt beispielgebend zwei gleiche erfindungsgemäße Synchronisationsvorrichtungen 1, die spiegelsymmetrisch zu einer Mittellängsachse m des Synchronkörpers 2 angeordnet sind, wobei die Federvorrichtungen 8 einander entgegengesetzte axiale Federkräfte ,F' aufweisen und jeweils zwischen dem zugeordneten Synchronring 7 und dem beiden zugeordneten Synchronkörper 2 federkraftwirksam sind. Bei beiden Synchronisationsvorrichtungen 1 stützt sich die Federanordnung 9 mit der zweiten Seite 10.2 in Synchronisationsrichtung s axial an dem Gangrad 4 ab, wobei das Gangrad 4 eine radial nach innen zum Synchronring 7 beabstandete dritte Aufnahme 12.3 zur axialen Führung und radialen Blockierung und Abstützung des Federelementes 10 der Federanordnung 9 in Synchronisationsrichtung s aufweist.

Wie aus der Figur 4 ersichtlich, kann über die Einstellung und/oder Wahl der Federkraft die Breite des durch die Konen 5.1, 5.2 begrenzten Luftspaltes 6 eingestellt werden. Dies kann beispielsweise durch eine Änderung einer vorgesehenen Vorspannung erfolgen, in der das erste Anschlagselement 11.1 mittelbar oder unmittelbar an den Synchronisationskörper 2 anliegt.

In Figur 5 wird eine Ausschnittsvergrößerung V gemäß Figur 4 gezeigt, wobei diese im Wesentlichen die Federvorrichtung 8 der in Figur 4 linken Synchronisationsvorrichtung 1 erfasst. Die Federvorrichtung 8 weist zur Abstützung der ersten Seite 10.1 der Federanordnung 9 ein drittes Anschlagselement 11. 3 auf, das an dem Gangrad 4 geführt und Federkraft F übertragungswirksam drehbeweglich hier über ein Nadellager 22 gegen Synchronisationsrichtung s gegen das erste Anschlagselement 11.1 gelagert angeordnet ist.

Das dritte Anschlagselement 11.3 ist hier als eine Kragenscheibe 23 mit einem Scheibenteil 23.1 und einem radial äußeren sich in Synchronisationsrichtung s erstreckenden Kragenstück 23.2 ausgebildet. Das Federelement 10 der Federanordnung 9 stützt sich mit ihrer zweiten Seite 10.2 an dem Scheibenteil 23.1 ab. Das Scheibenteil 23.1 ist seinerseits radial innen an dem Gangrad 4 axial geführt und ist gegen Synchronisationsrichtung s über das Nadellager 22 drehbeweglich an dem gegen das erste Anschlagselement angelagert. Das Gangrad 4 weist im Bereich der Federvorrichtung 8 eine axiale gegen Synchronisationsrichtung offene Öffnung 24 auf. Das Kragenstück 23 ist teilumfänglich ausgebildet und erstreckt sich lediglich über den für die Öffnung 24 vorgesehenen umfänglichen Bereich, wobei der Kragenstück 23.2 zur verdrehfesten Anlagerung sowie zur weiteren axialen Führung und axialen Beweglichkeit des dritten Anschlagselementes 11.3 in die axiale Öffnung 25 eingreift.

Nicht explizit dargestellt, aber implizit Figur 3 entnehmbar, sind drei Federvorrichtungen 8 für die jeweilige Synchronisationsvorrichtung 1 vorgesehen. Die Federvorrichtungen 8, die, wie in Figur 3 beispielgebend anhand der ersten Ausführungsform der Synchronisationsvorrichtung 1 gezeigt, sind in einem Drehwinkel von 120° umfänglich gleich voneinander beabstandet angeordnet. Entsprechend weist die Kragenscheibe 23 für die drei Federvorrichtungen 8 jeweils ein Kragenstück 23.2, also insgesamt drei Kragenstücke 23.2 auf, die jeweils in eine vorgesehene Öffnung 24 an dem Gangrad 4 eingreifen.

Das erste Anschlagelement 11.1 ist in der zweiten Ausführungsform der Synchronisationsvorrichtung 1 als axial beweglich gelagerte Drehscheibe 25 mit einem axial äußeren sich in Synchronisationsrichtung s erstreckenden umlaufenden Vorsprung 26 ausgebildet ist. Die Drehscheibe 25 ist mittels Presssitz in Richtung radial nach innen in Synchronisationsrichtung s vorn in der ersten Aufnahme 12.1 an Synchronring 6 festgelegt. Der Vorsprung 26 weist die radial nach außen weisende erste Gleitfläche 13.1 mit radialer Flächennormale in der das erste Anschlagselement 11.1 axial gleitverschieblich an der zweiten Gleitfläche 13.2 der Schulter 14 des Synchronkörpers 2 unmittelbar an demselben anliegt.

Wie den Figuren 1-5 unmittelbar entnehmbar, sind die Anschlagselemente 11.1, 11.2, 11.3 jeweils einstückig ausgebildet. Ferner sind die Anschlagselemente 11.1, 11.2, 11.3 jeweils aus einem dämpfungswirksamen Kunststoff gefertigt, wodurch eine mögliche Geräuschentwicklung weiter gemindert werden kann.

### Bezugszeichenliste

- 1: Synchronisationsvorrichtung
- 2: Synchronkörper
- 3: Schiebemuffe
- 4: Gangrad
- 4.1: Kupplungsverzahnung
- 5.1: erster Konus
- 5.2: zweiter Konus
- 6: Luftspalt
- 7: Synchronring
- 8: Federvorrichtung
- 9: Federanordnung
- 10: Federelement
- 10.1: erste Seite
- 10.2: zweite Seite
- 11.1: erstes Anschlagselement
- 11.2: zweites Anschlagselement
- 11.3: drittes Anschlagselement
- 12.1: erste Aufnahme
- 12.2: zweite Aufnahme
- 12.3: dritte Aufnahme
- 12a: vorderer Vorsprung
- 13.1: erste Gleitfläche
- 13.2: zweite Gleitfläche
- 14: Schulter
- 15: Kugelaufnahme
- 16: Kugel
- 17: Ausnehmung
- 18: Lochblende
- 19: Steckaufnahme
- 20.1: vorderer Schenkel
- 20.2: hinterer Schenkel
- 20.3: Quersteg
- 21: Gleitstein
- 22: Nadellager
- 23: Kragenscheibe
- 23.1: Scheibenteil
- 23.2: Kragenstück
- 24: Öffnung
- 25: Drehscheibe
- 26: Vorsprung
- F: Federkraft
- m: Mittellängsachse
- s: Synchronisationsrichtung
- w: Führungsweg

## Patentansprüche

1. Synchronisationsvorrichtung (1) mit einem Synchronkörper (2), einer Schiebemuffe (3), einem Gangrad (4) mit Kupplungsverzahnung (4.1) und einem zwischen Synchronkörper (2) und Kupplungsverzahnung (4.1) axial in und gegen Synchronisationsrichtung (s) verschiebbaren Synchronring (7), wobei
der Synchronring (7) mittels einer Federvorrichtung (8) in einer Neutralstellung am Synchronkörper (2) festgelegt ist, und in der Neutralstellung unter Federvorspannung an dem Synchronkörper (2) anliegt,
**dadurch gekennzeichnet,**
**dass** die Federvorrichtung (8) eine Federanordnung (9) aufweist, die sich mit einer ersten Seite (10.1) federkraftwirksam an einem an dem Synchronring (7) vorgesehenen ersten Anschlagselement (11.1) in Richtung auf den Synchronkörper (2) abstützt, und
**dass** das erste Anschlagselement (11.1) an dem Synchronkörper (2) axial geführt angeordnet ist, wobei das erste Anschlagselement (11.1) eine radial nach außen gerichtete erste Gleitfläche (13.1) mit radialer Flächennormalen (w) und der Synchronkörper (2) eine zweite Gleitfläche (13.2) aufweist, an der die erste Gleitfläche (13.1.) des ersten Anschlagselements (11.1) über einen axialen Führungsweg (w) gleitend anliegt.

2. Synchronisationsvorrichtung nach Anspruch 1,
**dadurch gekennzeichnet,**
**dass** ein zweites Anschlagselement (11.2) vorgesehen ist, das fest mit dem Synchronkörper (2) verbunden ist und an dem sich die Federanordnung (9) mit einer zweiten Seite (10.2) axial abstützt.

3. Synchronisationsvorrichtung nach Anspruch 2,
**dadurch gekennzeichnet,**
**dass** das zweite Anschlagselement (11.2) unter Begrenzung einer zweiten Aufnahme (12.2) die Federanordnung (9) radial außen in Synchronisationsrichtung (s) übergreift, wobei sich die Federanordnung (9) mit seiner zweiten Seite (10.2) in Synchronisationsrichtung (s) hinten an dem zweiten Anschlagselement (11.2) abstützt.

4. Synchronisationsvorrichtung nach Anspruch 1,
**dadurch gekennzeichnet,**
**dass** die Federvorrichtung (8) zwischen Synchronring (7) und Gangrad (4) federkraftwirksam ist.

5. Synchronisationsvorrichtung nach Anspruch 4,
**dadurch gekennzeichnet,**
**dass** sich die Federanordnung (9) mit der zweiten Seite (10.2) axial an dem Gangrad (4) abstützt.

6. Synchronisationsvorrichtung nach Anspruch 5,
**dadurch gekennzeichnet,**
**dass** das Gangrad (4) eine radial nach innen zum Synchronring (7) beabstandete dritte Aufnahme (12.3) zur axialen Führung und Abstützung der Federanordnung (9) in Synchronisationsrichtung (s) aufweist.

7. Synchronisationsvorrichtung nach einem der Ansprüche 4 bis 6,
**dadurch gekennzeichnet,**
**dass** die Federvorrichtung (8) zur Abstützung der ersten Seite (10.1) der Federanordnung (9) ein drittes Anschlagselement (11.3) aufweist, das an dem Gangrad (4) geführt und mittels Federkraft (F) drehbeweglich gegen das erste Anschlagselement (11.1) gelagert angeordnet ist.

8. Synchronisationsvorrichtung nach einem der Ansprüche 1 bis 7,
**dadurch gekennzeichnet,**
**dass** die Schiebemuffe (3) in der Neutralstellung an dem Synchronkörper (2) gegen eine axiale Verschiebung lagestabilisiert angeordnet ist.

9. Synchronisationsvorrichtung nach Anspruch 8,
**dadurch gekennzeichnet,**
**dass** die Schiebemuffe (3) radial innen und axial mittig eine Ausnehmung (17) aufweist, in die in der Neutralstellung der Schiebemuffe (3) eine an dem Synchronkörper (2) vorzugsweise axial mittig vorgesehene federbelastete Kugel (16) radial nach außen eingreift.

10. Synchronisierungsvorrichtung nach einem der Ansprüche 1 bis 10,
**dadurch gekennzeichnet,**
**dass** die Federvorrichtung (8) zwischen Synchronring (7) und Synchronkörper (2) federkraftwirksam ist.

## Claims

1. Synchronizing device (1) with a synchronizer body (2), a sliding sleeve (3), a gearwheel (4) with coupling toothing (4.1) and a synchronizer ring (7) which is displaceable between synchronizer body (2) and coupling toothing (4.1) axially in and counter to the synchronization direction (s), **characterized in that** the synchronizer ring (7) is fixed to the synchronizer body (2) in a neutral position by means of a spring device (8), and bears on the synchronizer body (2) under spring prestress in the neutral position, **characterized in that** the spring device (8) has a spring arrangement (9) which, by a first side (10.1), is supported in the direction of the synchronizer body (2) in an effective manner in terms of spring force on a first stop element (11.1) provided on the synchronizer ring (7), and **in that** the first stop element (11.1) is arranged on the synchronizer body (2) in an axially guided manner, **characterized in that** the first stop element (11.1) has a radially outwardly directed first sliding surface (13.1) with radial surface normals (W) and the synchronizer body (2) has a second sliding surface (13.2), on which the first sliding surface (13.1) of the first stop element (11.1) bears slidingly over an axial guide path (w).

2. Synchronizing device according to Claim 1, **characterized in that** a second stop element (11.2) is provided which is fixedly connected to the synchronizer body (2) and on which the spring arrangement (9) is supported axially by a second side (10.2) .

3. Synchronizing device according to Claim 2, **characterized in that** the second stop element (11.2) engages over the spring arrangement (9) radially on the outside in the synchronization direction (s), bounding a second receptacle (12.2), with the spring arrangement (9) being supported with the second side (10.2) thereof at the rear in the synchronization direction (s) on the second stop element (11.2).

4. Synchronizing device according to Claim 1, **characterized in that** the spring device (8) is effective in terms of spring force between synchronizer ring (7) and gearwheel (4).

5. Synchronizing device according to Claim 4, **characterized in that** the spring arrangement (9) is supported by the second side (10.2) axially on the gearwheel (4).

6. Synchronizing device according to Claim 5, **characterized in that** the gearwheel (4) has a third receptacle (12.3), which is spaced apart radially inward with respect to the synchronizer ring (7), for axially guiding and supporting the spring arrangement (9) in the synchronization direction (s).

7. Synchronizing device according to one of Claims 4 to 6, **characterized in that**, in order to support the first side (10.1) of the spring arrangement (9), the spring device (8) has a third stop element (11.3) which is guided on the gearwheel (4) and is arranged mounted rotatably against the first stop element (11.1) by means of spring force (F) .

8. Synchronizing device according to one of Claims 1 to 7, **characterized in that**, in the neutral position, the sliding sleeve (3) is arranged on the synchronizer body (2) in a manner stabilized positionally against an axial displacement.

9. Synchronizing device according to Claim 8, **characterized in that** the sliding sleeve (3) has, radially on the inside and axially centrally, a recess (17) in which, in the neutral position of the sliding sleeve (3), a spring-loaded ball (16) preferably provided axially centrally on the synchronizer body (2) engages radially to the outside.

10. Synchronizing device according to one of Claims 1 to 10, **characterized in that** the spring device (8) is effective in terms of spring force between synchronizer ring (7) and synchronizer body (2).

## Revendications

1. Dispositif de synchronisation (1) comprenant un corps de synchronisation (2), un manchon coulissant (3), un pignon de rapport (4) avec une denture d'accouplement (4.1) et une bague de synchronisation (7) pouvant être déplacée entre le corps de synchronisation (2) dans la denture d'accouplement (4.1) axialement dans et à l'encontre de la direction de synchronisation (s), la bague de synchronisation (7) étant fixée au moyen d'un dispositif de ressort (8) dans une position neutre sur le corps de synchronisation (2) et s'appliquant dans la position neutre par précontrainte du ressort contre le corps de synchronisation (2),
**caractérisé en ce que**
le dispositif de ressort (8) présente un agencement de ressort (9) qui s'appuie par un premier côté (10.1) sous l'action de la force de ressort contre un premier élément de butée (11.1) prévu sur la bague de synchronisation (7) dans la direction du corps de synchronisation (2), et
**en ce que** le premier élément de butée (11.1) est disposé de manière guidée axialement sur le corps de synchronisation (2), le premier élément de butée (11.1) présentant une première surface de glissement (13.1) orientée radialement vers l'extérieur avec une normale à la surface radiale (w) et le corps de synchronisation (2) présentant une deuxième surface de glissement (13.2) contre laquelle s'applique la première surface de glissement (13.1) du premier élément de butée (111) en glissant sur une course de guidage axiale (w) .

2. Dispositif de synchronisation selon la revendication 1,
**caractérisé en ce**
**qu'**un deuxième élément de butée (11.2) est prévu, lequel est connecté fixement au corps de synchronisation (2) et contre lequel s'appuie axialement l'agencement de ressort (9) avec un deuxième côté (10.2).

3. Dispositif de synchronisation selon la revendication 2,
**caractérisé en ce que**
le deuxième élément de butée (11.2) vient en prise par le dessus radialement à l'extérieur dans la direction de synchronisation (s) en limitant un deuxième logement (12.2), l'agencement de ressort (9) s'appuyant avec son deuxième côté (10.2) dans la direction de synchronisation (s) à l'arrière contre le deuxième élément de butée (11.2).

4. Dispositif de synchronisation selon la revendication 1,
**caractérisé en ce que**
le dispositif de ressort (8) agit avec une force de ressort entre la bague de synchronisation (7) et le pignon de rapport (4).

5. Dispositif de synchronisation selon la revendication 4,
**caractérisé en ce que**
l'agencement de ressort (9) s'appuie avec le deuxième côté (10.2) axialement contre le pignon de rapport (4).

6. Dispositif de synchronisation selon la revendication 5,
**caractérisé en ce que**
le pignon de rapport (4) présente un troisième logement (12.3) espacé radialement vers l'intérieur de la bague de synchronisation (7) pour le guidage axial et le support de l'agencement de ressort (9) dans la direction de synchronisation (s).

7. Dispositif de synchronisation selon l'une quelconque des revendications 4 à 6,
**caractérisé en ce que**
le dispositif de ressort (8) pour le support du premier côté (10.1) de l'agencement de ressort (9) présente un troisième élément de butée (11.3) qui est guidé sur le pignon de rapport (4) et qui est disposé de manière supportée contre le premier élément de guidage (11.1) de manière déplaçable en rotation au moyen de la force de ressort (F).

8. Dispositif de synchronisation selon l'une quelconque des revendications 1 à 7,
**caractérisé en ce que**
le manchon coulissant (3) est disposé dans la position neutre sur le corps de de synchronisation (2) de manière stabilisée en position pour l'empêcher de se déplacer axialement.

9. Dispositif de synchronisation selon la revendication 8,
**caractérisé en ce que**
le manchon coulissant (3) présente radialement à l'intérieur et axialement au centre un évidement (17) dans lequel, dans la position neutre du manchon coulissant (3), s'engage radialement vers l'extérieur une bille (16) sollicitée par ressort prévue de préférence axialement centralement sur le corps de synchronisation (2).

10. Dispositif de synchronisation selon l'une quelconque des revendications 1 à 10,
**caractérisé en ce que**
le dispositif de ressort (8) agit avec une force de ressort entre la bague de synchronisation (7) et le corps de synchronisation (2).
